# EUROPEAN PATENT APPLICATION

(11) **EP 3 483 746 A1**
(43) Date of publication of application: **15.05.2019**
(21) Application number: 17200837.7
(22) Date of filing: 09.11.2017
(51) Int. Cl.: G06F 17/27, G10L 15/00

(54) **METHODS AND DEVICES FOR GENERATING DATA TO TRAIN A NATURAL LANGUAGE UNDERSTANDING COMPONENT**

(71) Applicant: SNIPS, 75002 Paris (FR)
(72) Inventor: Leroy, David, 75002 PARIS (FR); Coucke, Alice, 75002 PARIS (FR); Gisselbrecht, Thibault, 75004 PARIS (FR)
(74) Representative: Verriest, Philippe

(57) **Abstract**

The invention concerns methods and devices adapted to generate, from original sample queries, additional training samples for model of a machine learning engine implementing an intent classification and a slot filling method for determining an intent corresponding to a query, by:
• for at least one intent I, collecting a first set of original queries SQ1 based on said at least one intent I;
• for each query of the first set SQ1 that is associated with at least one slot S:
o obtaining, for each at least one slot S, from a knowledge base comprising an ontology of terms associated with classes, a set of matching classes C;
o selecting, for each at least one slot S, a matching class C amongst the set of matching classes;
o obtaining, for each at least one slot S, additional values, from the knowledge base, associated to the matching class C ;

• determining a set of frames F corresponding to the at least one intent, at least one frame F of the set comprising a combination of the additional values obtained for each at least one slot S of each query of the first set SQ1 that is associated with at least one slot S;
• for each frame F of the set of frames, determining a set of tasks T, each task T comprising a request to send back a sample request corresponding to the at least one intent I and to said frame F;
• collecting a second set of sample queries SQ2 produced according to the set of tasks T;
• training the model used by the Intent classification method of the machine learning engine with the second set of sample queries SQ2 in relation to the at least one intent I;
• training the model used by the slot filling method of the machine learning engine with slot values of the queries of the second set of sample queries SQ2.

## Description

The present invention generally relates to the generation of data to train Natural Language Understanding components, used for example by artificial intelligence modules embedded in smart assistants or in chatbot systems.

Natural Language Understanding methods are widely implemented in numerous devices such as mobile devices with voice interfaces or systems hosting conversational agents. These techniques allow extracting the intention (for example, "Get Weather") and the parameters (for example, "Berlin" as the name of the city for which the forecast is requested, "tomorrow" as the date of interest, etc.) that could be derived from an oral or a written query (for example, "what is the weather tomorrow in Berlin?"), formulated by a user - generally a human being.

Natural Language Understanding methods usually rely on a model that is bootstrapped with a set of sample queries.

It is nowadays accepted to provide as training material to a Natural Language Understanding component of a commercial solution, between fifty and one hundred sample queries, for one given intention.

The gathering of these sample queries is today mainly carried out using non-automated solutions. For instance, a known method consists in generating a set of sample queries by means of crowdsourcing systems where human workers are being asked to deliver sample queries ("what is the weather tomorrow in Berlin?", "Will the sun shining this evening?", "How cold is it outside?", etc.) corresponding to a given intention (for example, "Get Weather"). While these solutions are economical and fast, they are also affected by important drawbacks. The diversity of sample queries obtained according to these solutions is often very low, similar wording/formulation/expression being overrepresented while many correct sentences may be forgotten. Moreover, without additional error-prone and time-consuming supervision tasks, there is no provision for identification of the parameters corresponding to each sample query, since said parameters cannot be explicitly derived from the collected queries. As a consequence, the manually collected sample queries cannot be used directly to train a machine learning system. In addition, quality issues may arise with these solutions, given that some human workers may not interpret the intention correctly, or may even not respect the instructions. Ultimately, the level of performance achievable using Natural Language Understanding methods trained with a set of sample queries collected according to these known solutions is greatly reduced by these problems.

To mitigate these problems in particular, it is also known to use a semi-automated solution consisting in creating a data generation grammar for obtaining, from collected sample queries, a more diverse set of distinct query examples and identified at least partially parameters. However, the sample queries created in this way are highly correlated : their diversity is limited to the expressive power of the used grammar, and so to the imagination of the person having created it. In addition, writing query grammars is time-consuming.

It is therefore still desirable to provide a method and a device adapted to generate very quickly and reliably, from a size-limited original set of sample queries, a large number additional training samples adapted to be used directly, during a training phase, to train a model of a machine learning engine, said additional training samples being diverse.

To that end, according to a first aspect, the present invention concerns a method for generating, from an original set of sample queries, additional training samples adapted to be used, during a training phase, to train a model of a machine learning engine. The machine learning engine is configured to interpret a query formed of tokens, by implementing:
- an intent classification method for determining an intent corresponding to the query, according to the model and a set of intents supported by the machine learning engine; and,
- a slot filling method for identifying, amongst the tokens of the query, slots corresponding to the intent determined by the intent classification method according to the model;
The method comprises the following steps:
- for at least one intent I, collecting a first set of original queries SQ1 based on said at least one intent I;
- for each query of the first set SQ1 that is associated with at least one slot S:
   ∘ obtaining, for each at least one slot S of said query of the first set SQ1, from a knowledge base comprising an ontology of terms associated with classes, a set of matching classes C;
   ∘ selecting, for each at least one slot S of said query of the first set SQ1, a matching class C amongst the set of matching classes;
   ∘ obtaining, for each at least one slot S of said query of the first set SQ1, additional values, from the knowledge base, associated to the matching class C ;
- determining a set of frames F corresponding to the at least one intent, at least one frame F of the set comprising a combination of the additional values obtained for each at least one slot S of each query of the first set SQ1 that is associated with at least one slot S;
- for each frame F of the set of frames, determining a set of tasks T, each task T comprising a request to send back a sample request corresponding to the at least one intent I and to said frame F;
- collecting a second set of sample queries SQ2 produced according to the set of tasks T;
- training the model used by the Intent classification method of the machine learning engine with the second set of sample queries SQ2 in relation to the at least one intent I; and
- training the model used by the slot filling method of the machine learning engine with slot values of the queries of the second set of sample queries SQ2.

The first set of original queries SQ1 may comprise one or more original queries that are not associated with any slot. For instance, an original query of the first set may relate to an intent "Say Hello", and may be expressed as "hello", "hi", "good morning", etc. The first set of original queries SQ1 may also comprise one or more original queries that are associated with at least one slot, and one or more original queries that are not associated with any slot. The first set of original queries SQ1 may also comprise only original queries that are associated with at least one slot.

The method according to the invention allows thus to generate thousands of high-quality additional sample queries SQ2, matching a given ontology, typically in less than a few hours. Diversity of these additional sample queries SQ2 can be enforced by relying on numerous sources providing the second set of sample queries SQ2. Moreover, diversity of these additional sample queries SQ2 is also improved thanks to the use of diverse slot values and constrained combinations of present slots, during the determination of the set of frames F. Thanks notably to the use of the set of Frame to determine the set of tasks, the second set of sample queries SQ2 is supervised: intents and slots are known and can be directly used to train intent classification and slot-filling methods. The presence/absence of slots in the frame F allows collecting sample queries, with different formulations, that are self-supervised: it is known which slots are present in the queries of the second set.

The first set of original queries SQ1, based on the at least one intent I, may be obtained by filtering out a larger set of sample queries, using a best matching algorithms and/or relevance/popularity sorting algorithms.

The set of frames F may be determined so as that its size is determined according to a desired size of the set of tasks T.

According to one embodiment, the second set of sample queries SQ2 may be processed to control quality, and/or to ensure that the tasks T have been accomplished correctly, by:
- filtering out queries of the second set SQ2 of sample queries that does not match the at least one intent I; and/or,
- filtering out queries of the second set SQ2 of sample queries that does not comply with the structure of the corresponding frame F; and/or,
- filtering out queries of the second set SQ2 of sample queries that doesn't respect grammatical rules; and/or,
- filtering out all queries, collected from one single source, of the second set SQ2 of sample queries that are similar.
Accordingly, it is possible to ensure that:
- the sample queries of the second set SQ2 are diverse, and representative of what an end user would say;
- the intent I adequately correspond to the meaning of the sample queries of the second set SQ2;
- the slots match exactly what they are intended to mean.

According to a second aspect, the present invention also relates to a computer program that can be downloaded from a communication network and/or stored on a medium. This computer program comprises instructions for causing implementation of the method according to the first aspect when said program is run by the processor.

According to a third aspect, the present invention also relates to information storage means, storing a computer program comprising a set of instructions causing implementation of the method according to the first aspect, when the stored information is read from said information storage means and run by a processor.

According to a fourth aspect, the present invention also concerns a module for generating, from an original set of sample queries, additional training samples adapted to be used, during a training phase, to train a model of a machine learning engine will be described according to an embodiment. The machine learning engine is configured to interpret a query formed of tokens, by implementing:
- an intent classification method for determining an intent corresponding to the query, according to the model and a set of intents supported by the machine learning engine; and,
- a slot filling method for identifying, amongst the tokens of the query, slots corresponding to the intent determined by the intent classification method according to the model.

The module is notably adapted to implement the method according to the first aspect. The module is for instance adapted to be embedded in a computing device, such as an application server. The module comprises a collecting module arranged to collect, for at least one intent I, a first set of original queries SQ1 based on said at least one intent I, each query of the first set of original queries SQ1 being associated with at least one slot S.

The module comprises a class identifier module, arranged to obtain, for each query of the first set SQ1 that is associated with at least one slot S, and for each at least one slot S of said query of the first set SQ1, from a knowledge base comprising an ontology of terms associated with classes, a set of matching classes C.

The module comprises a class selector module, arranged to select, for each query of the first set SQ1 that is associated with at least one slot S, and for each at least one slot S of said query of the first set SQ1, a matching class C amongst the set of matching classes.

The module comprises an addition values collector module arranged to obtain, for each query of the first set SQ1 that is associated with at least one slot S, and for each at least one slot S of said query of the first set SQ1, additional values, from the knowledge base, associated to the matching class C.

The module comprises a frame generator module arranged to determine, a set of frames F corresponding to the at least one intent I, at least one frame F of the set comprising a combination of the additional values obtained for each at least one slot S of each query of the first set SQ1 that is associated with at least one slot S.

The module comprises a task generator module arranged to determine, for each frame F of the set of frames, a set of tasks T, each task T comprising a request to send back a sample request corresponding to the at least one intent I and to said frame F.

The module comprises a work collector module arranged to collect a second set of sample queries SQ2, produced according to the set of tasks T.

The module comprises an intent classification training module, configured to train the model used by the Intent classification method of the machine learning engine with the second set of sample queries SQ2 in relation to the at least one intent I. The module comprises a slot filling training module, configured to train the model used by the slot filling method of the machine learning engine with slot values of the queries of the second set of sample queries SQ2.

The characteristics of the invention will emerge more clearly from the following description of an example of an embodiment of the invention, said description being made with reference to the accompanying drawings, amongst which:
Fig. 1 schematically represents a smart assistant provided with a Natural Language Understanding component;
Fig. 2 schematically represents steps of a method, according to an embodiment, for generating, from an original set of sample queries, additional training samples for a machine learning engine the architecture of a mobile device;
Fig. 3 schematically represents a module, according to an embodiment, for generating, from an original set of sample queries, additional training samples for a machine learning engine the architecture of a mobile device.

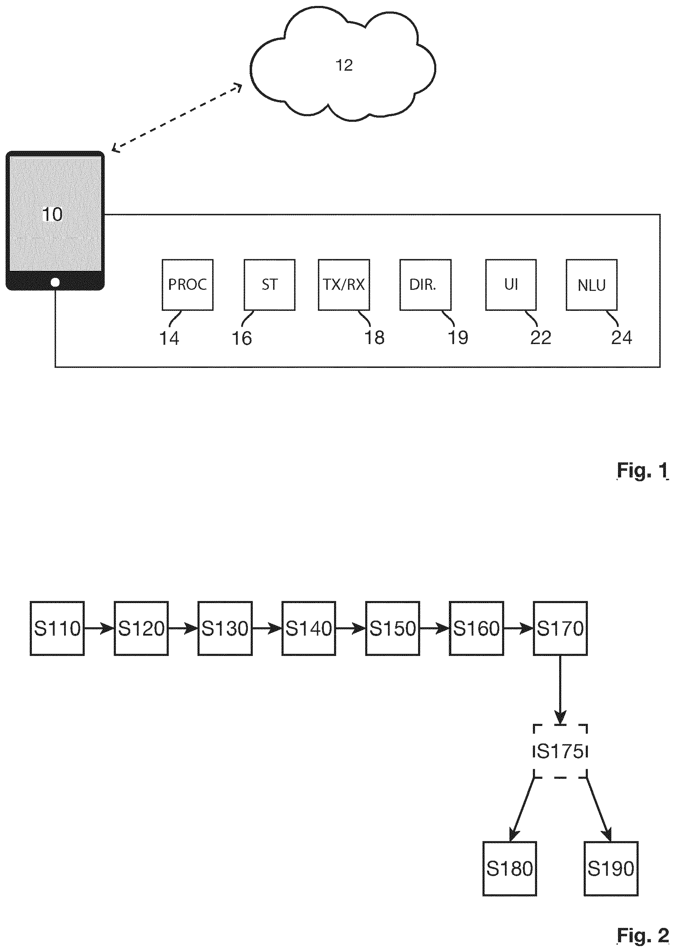

Now we refer to Fig. 1, where a smart assistant 10 is now described. The smart assistant 10 may be a mobile device, such as a smartphone, a laptop or tablets. The smart assistant 10 may also be a computing device included in a conversational system, for example a computer system adapted to provide chatbot like services. The smart assistant 10 comprises a processing module 14, for example a module provided with at least one Central Processing Unit and a Random-Access Memory. The smart assistant 10 further comprises storage means 16, for example a Hard-Drive and/or a solid-state memory, for storing data and allowing the processing module 14 to read and/or write said data. The smart assistant 10 may also include a communication interface 18 adapted to allow access to a communication network 12. In one embodiment, the communication network 12 is coupled to the Internet. The communication interface 18 may also be adapted to allow the smart assistant to send data to and/or receive data to other devices, through the communication network 12. The smart assistant may also comprise a direct communication interface 19, configured to send data to and/or receive data from another device. More particularly, the direct communication interface 19 may be configured to set up a point-to-point communication channel-for instance a Bluetooth communication channel-between mobile devices. The direct communication interface 19 may also comprise means for accessing a local communication network to which other mobile devices are coupled. The smart assistant 10 may further comprises a user interface 22, provided for example with a touch-sensitive screen, sensors and an audio playback and recording interface.

The smart assistant 10 comprises a Natural Language Understanding NLU component 24, used for example by artificial intelligence modules. The NLU component 24 is configured to provide the smart assistant with the ability to obtain a query comprising a text, and process it to understand its meaning in order to trigger at least one action, related to said query, on the smart device. The query is, for instance, formulated orally or in writing by a user. The user interface 22 may be used to capture the query. The query can also be received from the communication interface 18. The query is composed by lexical tokens, each token corresponding to a word or other atomic parse element. More particularly, the NLU component 24 is configured to extract, from the query (for example, "what is the weather tomorrow in Berlin?"), an intent (for example, "Get Weather"),related parameters - also called slots (for example, "time", "location", etc.), and their corresponding value ("for example, "tomorrow", "Paris", etc.).

The Natural Language Understanding NLU component 24 implements methods using on a model that is bootstrapped, during a training phase, with a set of sample queries. A data structure of a sample query that can be used during the training phase is shown hereafter (values are noted in italic): 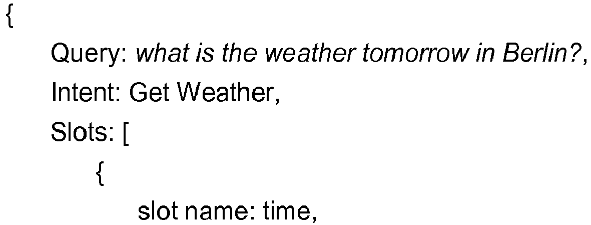 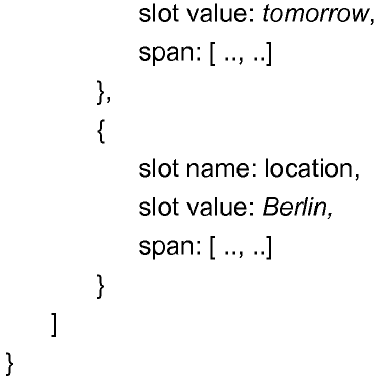 The NLU component 24 comprises, for example, a machine learning engine wherein the machine learning engine implements an intent classification method and a slot filling method.

The intent classification method is arranged to determine an intent corresponding to the query, according to the model and a set of intents and/or actions supported by the machine learning engine. During a training phase, for each intent supported by the machine learning engine, the intent classification method is trained with a dedicated set of sample queries. For example, if the intent classification method is supposed to differentiate between requests for obtaining weather and requests for booking restaurants, a first set of sample queries for the intent "Get Weather", and a second set of sample queries for the intent "Book a restaurant" are used during the training phase. The number of entries for each set of sample queries used during the training phase, is typically sensibly greater or equal to fifty.

The slot filling method is arranged to identify, amongst the tokens of the query, slots corresponding to the intent determined by the intent classification method according to the model. For example, if the intent of the query has been identified as "obtaining weather forecasts", the slot filling method will determine a value, for each token in the request corresponding to the slots associated to the intent. For example, for the request "what is the weather tomorrow in Berlin?", the value "tomorrow" for the slot "Period" and the value "Berlin" for the slot "Location" will be determined, the slots "Period" and "Location" being associated to the intent "obtaining weather forecasts".

The machine learning engine may also implement a voice recognition method, the queries and slot values being also used to train said voice recognition method.

The processing module 14 is capable of executing instructions. The processing module 14 is configured to trigger and execute at least one action, according to the intention and the values of the slots, determined by the NLU component 24.

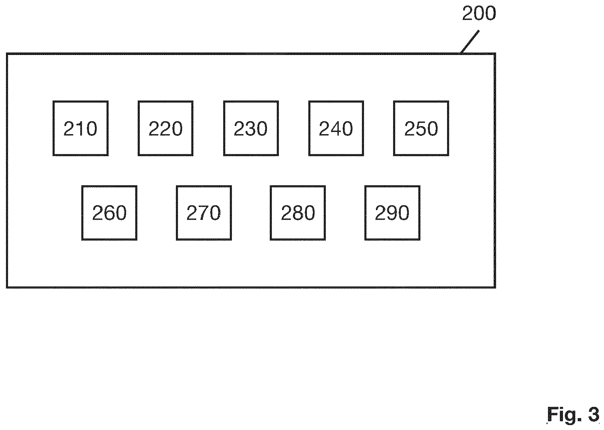

Any and all steps of the method described hereafter with regard to figure 3, may be implemented in software by execution of a set of instructions or program by a programmable computing machine, such as a PC (*Personal Computer*), a DSP (*Digital Signal Processor*) or a micro-controller; or else implemented in hardware by a machine or a dedicated component, such as an FPGA (*Field-Programmable Gate Array*) or an ASIC (*Application-Specific Integrated Circuit).*

Figure 2 schematically represents a method for generating, from an original set of sample queries, additional training samples for a machine learning engine. More particularly, additional training samples obtained with the execution of the method according to the invention may be used, during the training phase, to train the model of the Natural Language Understanding NLU component 24 of the mobile device 10. The method is intended to augment significantly the quantity of the learning materials available to train the model of the Natural Language Understanding NLU component 24.

An example will be described hereafter to illustrate the steps of the method according to an embodiment of the invention. In this example, four different intent will be considered : " Switch Lights On" associated with one slot tagged "room", "Switch Lights Off' associated with one slot tagged "room", "Change Light Color" associated with one slot tagged "room" and one slot tagged "color", "Change Light Intensity" associated with one slot tagged "room" and one slot tagged "intensity".

During a step S110, for at least one intent I, a first set of original queries SQ1 based on said at least one intent I are collected. Each original query of the first set SQ1 may be associated with at least one slot S. Each slot S is also associated with at least one tag Tg. The tag Tg allows to describe semantically the corresponding slot S. However, the first set SQ1 may comprise one or more original queries that are not associated with any slot. For instance, an original query of the first set may relate to an intent "Say Hello", and may be expressed as "hello", "hi", "good morning", etc.

In particular, during the step S110, for each query of the first set SQ1 that is associated with at least one slot S, the value of each slot S is extracted.

According to the previously introduced example, for the intent "switch the lights on", the first set of original queries SQ1 may comprise: "switch the lights on", "please switch on the bedroom lights", "can you turn on the lights in the kitchen". The extracted values corresponding to the slot having a tag "room" will be : "bedroom", "kitchen". For the intent "switch the lights off', the first set of original queries SQ1 may comprise: "switch the lights off', "please switch off the bedroom lights", "I don't need the light any more in the kitchen". The extracted values corresponding to the slot having a tag "room" will be : "bedroom", "kitchen". For the intent "Change Light Color", the first set of original queries SQ1 may comprise: " turn the lights to red", " make the bedroom light purple", "I'd prefer the light to be blue in the kitchen". The extracted values corresponding to the slot having a tag "room" will be : "bedroom", "kitchen". The extracted values corresponding to the slot having a tag "color" will be : "red", "purple", "blue". For the intent "Change Light Intensity", the first set of original queries SQ1 may comprise: " turn the lights to 20%", "set the bedroom light to 100%", "I'd prefer the light to be 25% in the kitchen". The extracted values corresponding to the slot having a tag "room" will be : "bedroom", "kitchen". The extracted values corresponding to the slot having a tag "intensity" will be : "20%", "100%", "25%".

The original queries of the first set SQ1 are typically sample queries produced by human(s). Typically, the first set SQ1 comprises a dozen or a few dozens sample queries with associated slots. The first set SQ1 can be a subset of a larger set of sample queries that has been filtered out and/or checked and/or curated either manually or automatically, using for example best matching algorithms and/or relevance/popularity sorting algorithms.

During a step S120, for each query of the first set SQ1 that is associated with at least one slot S, and for each tagged slot S of said query of the first set of original queries SQ1, a database query is performed in a knowledge base, in order to obtain a set of potential matching classes, according to the values extracted for said tagged slot S during the step S130. The knowledge base comprises an ontology of terms associated with classes.

According to the previously introduced example, considering the extracted values "bedroom" and "kitchen" corresponding to the slot having a tag "room", the list of potential matching classes obtained from the knowledge base comprise the class "room". Considering the extracted values "red" corresponding to the slot having a tag "color", the list of potential matching classes obtained from the knowledge base comprise the classes "colors", "primary colors", "mineral colors". Considering the extracted values "blue" corresponding to the slot having a tag "color", the list of potential matching classes obtained from the knowledge base comprise the classes "colors", "primary colors". Considering the extracted values "purple" corresponding to the slot having a tag "color", the list of potential matching classes obtained from the knowledge base comprise the classes "colors". Considering the extracted values corresponding to the slot having a tag "intensity", the list of potential matching classes obtained from the knowledge base is empty since they don't relate to classes, but as numerical values and are considered as is.

During a step S130, a matching class C is selected amongst the set of potential matching classes, for each query of the first set SQ1 that is associated with at least one slot S, and for each tagged slot S.

For instance, a ranking algorithm may be used to select the matching class C amongst the set of potential matching classes, for each query of the first set SQ1 that is associated with at least one slot S, and for each tagged slot S. More particularly, the ranking algorithm may be configured to select the matching class C amongst the set of potential matching classes, according to the number of values that can be found at the same time in slot's values in the first set SQ1 and in potential matching classes. The selection of a matching class C for a given slot S may be realized, manually for instance, during a definition phase of the ontology used by the the Natural Language Understanding NLU component 24, based on results provided by the ranking algorithm.

During a step S140, for each query of the first set SQ1 that is associated with at least one slot S, and for each tagged slot S of said query of the first set of original queries SQ1, additional values are obtained by performing a knowledge base query for the selected matching class C. Typically, hundreds/thousands of additional values for the slot S can be retrieved.

According to the previously introduced example, for the matching class "colors", a query to obtain a list of additional values are sent to the knowledge base, returning a list of values comprising new values - for instance more than two thousand - such as "grey", "yellow", etc.

During a step S150, a set of frames F are determined corresponding to the intent I, according to additional values obtained during step S140. Advantageously, each frame F comprises a combination of additional values obtained for the at least one slot S. However, frame without slot may also be determined. During the step S150, each frame F may be determined by:
- randomly picking one query of the first set of original queries SQ1;
- obtaining the tags Tg corresponding to the slots S of said picked query;
- for each slot of said picked query, according to the corresponding tag Tg, randomly pick a slot value, chosen from classes associated with said slot.

For example, one query of the first set of original queries SQ1, picked randomly, may be, with tags of the slots being noted inside brackets: "Give me the weather in [LOCATION]Berlin", "Show me the weather", "Tell me about the weather in [LOCATION]Paris [DATETIME]tomorrow". The set of frames F may then comprised:
- Frame 1, Intent: Get Weather, slots: [LOCATION]Madrid
- Frame 2, Intent: Get Weather , slots: [LOCATION]Madrid, [DATETIME]tomorrow
- Frame 3, Intent: Get Weather, slots: none
- Frame 4, Intent: Get Weather, slots: [LOCATION]Lyon

During the step S150, the number of frames F generated may relate to the number of sample queries required to generate tasks during the step S160. The additional values used to obtain the combination for the frames F may be selected according to a probability distribution related to information related to the first set of original queries SQ1. Typically, the set of frames F may be generated by implementing a uniform random sampling method, on the distribution of the slots S comprised in the first set SQ1, and a uniform random sampling method on possible values for the slots S comprised in the first set SQ1. The distribution of the slots S comprised in the first set SQ1 may optionnaly be readjusted, for example manually.

During a step S160, for each frame F determined during the step S150, a set of tasks T is generated. Each task T comprises a request for at least one human worker to send back a sample request corresponding to the intent I and to the corresponding frame F.

According to the previously introduced example, one thousand tasks T may be generated, using uniform random sampling methods as previously described, in which human workers are asked to generate sample queries, for the intent "Switch Lights On", as detailed hereafter:
- one thirds of the sample queries will not contain any slot;
- two thirds of the sample queries will comprise a slot tagged as "room" and the value of said slot will be uniformly sampled from the additional values obtained during a step S140 for said slot.
One thousand tasks T may be generated in which human workers are asked to generate sample queries, for the intent "Switch Lights Off', as detailed hereafter:
- one thirds of the sample queries will not contain any slot;
- two thirds of the sample queries will comprise a slot tagged as "room", and the value of said slot will be uniformly sampled from the additional values obtained during a step S140 for said slot.
One thousand tasks T may be generated in which human workers are asked to generate sample queries, for the intent " Change Light Color", as detailed hereafter:
- one thirds of the sample queries will comprise a slot tagged as "room", and the value of said slot will be uniformly sampled from the additional values obtained during a step S140 for said slot;
- two thirds of the sample queries will comprise:
   ∘ a slot tagged as "room", and the value of said slot will be uniformly sampled from the additional values obtained during a step S140 for said slot;
   ∘ a slot tagged as "color" and the value of said slot will be uniformly sampled from the additional values obtained during a step S140 for said slot.
One thousand tasks T may be generated in which human workers are asked to generate sample queries, for the intent " Change Light Intensity", as detailed hereafter:
- one thirds of the sample queries will comprise a slot tagged as "intensity", and the value of said slot will be sampled from a dedicated grammar implemented for percentages;
- two thirds of the sample queries will comprise:
   ∘ a slot tagged as "room", and the value of said slot will be uniformly sampled from the additional values obtained during a step S140 for said slot;
   ∘ a slot tagged as "intensity", and the value of said slot will be sampled from a dedicated grammar implemented for percentages.

During a step S170, a second set SQ2 of sample queries is received. The second set SQ2 corresponds to the sample queries produced by human workers according to the set of tasks T for each frame F related to the intent I.

In an embodiment, each task T is a work unit that are submitted to workers on a crowdsourcing platform. Workers are asked to complete a task based on the corresponding frame brief.

For example, taking into consideration the example describded in the description in relation with the step S150, the completed tasks T may comprise:
- For frame n°1 and worker n°0, "Show me the weather in [LOCATION]Madrid";
- For frame n°1 and worker n°1, "I'd love to know about the weather in [LOCATION]Madrid";
- For frame n°2 and worker n°0, "Weather in [LOCATION]Madrid, [DATETIME]tomorrow please";
- For frame n°2 and worker n°1, "Tell me what's the weather is gonna be DATETIME]tomorrow in [LOCATION]Madrid";
- etc.

During an optional step S175, the second set SQ2 may be processed to control quality, and/or to ensure that the tasks have been accomplished correctly. The processing may include one or a combination of the following processing:
- filtering out queries that does not match the intent I; for example, deleting queries related to booking a restaurant whereas the intent related to the task was Get Weather;
- filtering out queries that don't comply with the structure of the frame, typically queries that contain unexpected values for a slot ; for example, deleting queries such as " What is the weather tomorrow night in Paris?", if the task T requires the use of the value "tomorrow" for the slot tagged "time"; this process can be automated by comparing frequencies of appearance of the unexpected word inside and outside the slot, and by judging based on significance of this statistic; in case of doubt, the sample queries can be discarded, or manually checked;
- filtering out queries that doesn't respect grammatical rules, for example "For the nice weather in Paris I want tomorrow"; these incorrect queries can be identified by the intent classifier trained on the generated data; these queries can also be identified as incorrect, if it is not possible to identify slots; in case of doubt, the sample queries can be discarded, or manually checked;
- filtering out too similar queries that have been sent by a specific human workers, for example, when the latter repeatedly sends the same query, only adapting the values of the slots, for which he has no choice; these similar queries can be detected by measuring the lexical diversity per human worker.
Based on the processing performed during the optional step S175, it is possible to send feedback information related to the sample queries submitted by each human worker.

During a step S180, the model used by the Intent classification method of the machine learning engine is trained with the second set SQ2 of queries in relation to the intent I.

During a step S190, the model used by the slot filling method of the machine learning engine is trained with slot values of the queries of the second set SQ2.

Referring now to figure 3, a module 200 for generating, from an original set of sample queries, additional training samples adapted to be used, during a training phase, to train a model of a machine learning engine will be described according to an embodiment. The machine learning engine is configured to interpret a query formed of tokens, by implementing:
- an intent classification method for determining an intent corresponding to the query, according to the model and a set of intents supported by the machine learning engine; and,
- a slot filling method for identifying, amongst the tokens of the query, slots corresponding to the intent determined by the intent classification method according to the model.
The module is notably adapted to implement the method described previously. The module is for instance adapted to be embedded in a computing device, such as an application server.

The module 200 comprises a collecting module 210 arranged to collect, for at least one intent I, a first set of original queries SQ1 based on said at least one intent I.

The module 200 comprises a class identifier module 220, arranged to obtain, for each query of the first set SQ1 that is associated with at least one slot S, and for each at least one slot S of said query of the first set SQ1, from a knowledge base comprising an ontology of terms associated with classes, a set of matching classes C.

The module 200 comprises a class selector module 230, arranged to select, for each query of the first set SQ1 that is associated with at least one slot S, and for each at least one slot S of said query of the first set SQ1, a matching class C amongst the set of matching classes.

The module 200 comprises an addition values collector module 240 arranged to obtain, for each query of the first set SQ1 that is associated with at least one slot S, and for each at least one slot S of said query of the first set SQ1, additional values, from the knowledge base, associated to the matching class C.

The module 200 comprises a frame generator module 250 arranged to determine, a set of frames F corresponding to the at least one intent I, each frame F of the set comprising a combination of the additional values obtained for each at least one slot S of each query of the first set SQ1 that is associated with at least one slot S.

The module 200 comprises a task generator module 260 arranged to determine, for each frame F of the set of frames, a set of tasks T, each task T comprising a request to send back a sample request corresponding to the at least one intent I and to said frame F.

The module 200 comprises a work collector module 270 arranged to collect a second set of sample queries SQ2, produced according to the set of tasks T.

The module 200 comprises an Intent classification training module 280, configured to train the model used by the Intent classification method of the machine learning engine with the second set of sample queries SQ2 in relation to the at least one intent I.

The module 200 comprises a slot filling training module 290, configured to train the model used by the slot filling method of the machine learning engine with slot values of the queries of the second set of sample queries SQ2.

## Claims

1. Method for generating, from an original set of sample queries, additional training samples adapted to be used, during a training phase, to train a model of a machine learning engine, the machine learning engine being configured to interpret a query formed of tokens, by implementing:
• an intent classification method for determining an intent corresponding to the query, according to the model and a set of intents supported by the machine learning engine; and,
• a slot filling method for identifying, amongst the tokens of the query, slots corresponding to the intent determined by the intent classification method according to the model;
wherein the method comprising the following steps:
• for at least one intent (I), collecting (S110) a first set of original queries (SQ1) based on said at least one intent (I);
• for each query of the first set (SQ1) that is associated with at least one slot (S):
∘ obtaining (S120), for each at least one slot (S) of said query of the first set (SQ1), from a knowledge base comprising an ontology of terms associated with classes, a set of matching classes (C);
∘ selecting (S130), for each at least one slot (S) of said query of query of the first set (SQ1), a matching class (C) amongst the set of matching classes;
∘ obtaining (S140), for each at least one slot (S) of said query of the first set (SQ1), additional values, from the knowledge base, associated to the matching class (C) ;
• determining (S150) a set of frames (F) corresponding to the at least one intent (I), at least one frame (F) of the set comprising a combination of the additional values obtained for each at least one slot (S) of each query of the first set (SQ1) that is associated with at least one slot S;
• for each frame (F) of the set of frames, determining (S160) a set of tasks (T), each task (T) comprising a request to send back a sample request corresponding to the at least one intent (I) and to said frame (F);
• collecting (S170) a second set of sample queries (SQ2) produced according to the set of tasks (T);
• training the model used by the Intent classification method of the machine learning engine with the second set of sample queries (SQ2) in relation to the at least one intent (I); and
• training the model used by the slot filling method of the machine learning engine with slot values of the queries of the second set of sample queries (SQ2).

2. Method according to claim 1, wherein the first set of original queries (SQ1) based on the at least one intent (I) is obtained (S110) by filtering out a larger set of sample queries, using a best matching algorithms and/or relevance/popularity sorting algorithms.

3. Method according to any one of the preceding claims, wherein the set of frames (F) is determined (S150) so as that its size is determined according to a desired size of the set of tasks (T).

4. Method according to any one of the preceding claims, wherein the second set of sample queries (SQ2) is processed to control quality, and/or to ensure that the tasks (T) have been accomplished correctly, by filtering out queries of the second set of sample queries that does not match the at least one intent (I).

5. Method according to any one of the preceding claims, wherein the second set of sample queries (SQ2) is processed to control quality, and/or to ensure that the tasks (T) have been accomplished correctly, by filtering out queries of the second set (SQ2) of sample queries that does not comply with the structure of the corresponding frame (F).

6. Method according to any one of the preceding claims, wherein the second set of sample queries (SQ2) is processed to control quality, and/or to ensure that the tasks (T) have been accomplished correctly, by filtering out queries of the second set (SQ2) of sample queries that doesn't respect grammatical rules.

7. Method according to any one of the preceding claims, wherein the second set of sample queries (SQ2) is processed to control quality, and/or to ensure that the tasks (T) have been accomplished correctly, by filtering out all queries, collected from one single source, of the second set (SQ2) of sample queries that are similar.

8. Computer program comprising instructions for causing implementation of the method according to any one of the claims 1 to 7, when said program is run by the processor.

9. Support for storing a computer program comprising a set of instructions causing implementation of the method according to any one of the claims 1 to 7, when the stored information is read from said support and run by a processor.

10. Module (200) for generating, from an original set of sample queries, additional training samples adapted to be used, during a training phase, to train a model of a machine learning engine, the machine learning engine being configured to interpret a query formed of tokens, by implementing:
• an intent classification method for determining an intent corresponding to the query, according to the model and a set of intents supported by the machine learning engine; and,
• a slot filling method for identifying, amongst the tokens of the query, slots corresponding to the intent determined by the intent classification method according to the model;
wherein the module (200) comprises:
• a collecting module (210) arranged to collect, for at least one intent (I), a first set of original queries (SQ1) based on said at least one intent (I);
• a class identifier module (220), arranged to obtain, for each query of the first set (SQ1) that is associated with at least one slot (S), and for each at least one slot (S) of said query of the first set (SQ1), from a knowledge base comprising an ontology of terms associated with classes, a set of matching classes (C);
• a class selector module (230), arranged to select, for each query of the first set (SQ1) that is associated with at least one slot (S), and for each at least one slot (S) of said query of the first set (SQ1), a matching class (C) amongst the set of matching classes;
• an addition values collector module (240) arranged to obtain, for each query of the first set (SQ1) that is associated with at least one slot (S), and for each at least one slot (S) of said query of the first set (SQ1), additional values, from the knowledge base, associated to the matching class (C);
• a frame generator module (250) arranged to determine, a set of frames (F) corresponding to the at least one intent (I), at least one frame (F) of the set comprising a combination of the additional values obtained for each at least one slot (S) of each query of the first set (SQ1) that is associated with at least one slot (S);
• a task generator module (260) arranged to determine, for each frame (F) of the set of frames, a set of tasks (T), each task (T) comprising a request to send back a sample request corresponding to the at least one intent I and to said frame (F);
• a work collector module (270) arranged to collect a second set of sample queries (SQ2), produced according to the set of tasks (T);
• an Intent classification training module (280), configured to train the model used by the Intent classification method of the machine learning engine with the second set of sample queries (SQ2) in relation to the at least one intent (I);
• a slot filling training module (290), configured to train the model used by the slot filling method of the machine learning engine with slot values of the queries of the second set of sample queries (SQ2).
